# EUROPÄISCHE PATENTANMELDUNG

(11) **EP 4 300 097 A1**
(43) Veröffentlichungstag der Anmeldung: **03.01.2024**
(21) Anmeldenummer: 22181263.9
(22) Anmeldetag: 27.06.2022
(51) Int. Cl.: G01N 31/12, B01D 53/04

(54) **VENTILVORRICHTUNG, ADSORPTIONSVORRICHTUNG UND VERFAHREN ZUM BETRIEB EINER ADSORPTIONSVORRICHTUNG**

(71) Anmelder: C. Gerhardt GmbH & Co. KG, 53639 Königswinter (DE)
(72) Erfinder: BECKER, Dennis, 53639 Königswinter (DE); JEUB, Uwe, 53639 Königswinter (DE); ADAMEK, Tatjana, 53639 Königswinter (DE)
(74) Vertreter: Grünecker Patent- und Rechtsanwälte PartG mbB

(57) **Zusammenfassung**

Die Erfindung betrifft eine Ventilvorrichtung für ein Elementaranalysegerät, die eine erste und eine zweite Ringleitung umfasst, wobei die erste und die zweite Ringleitung jeweils einen Einlass und mehrere Auslässe aufweisen, jeder Auslass mit einem Sperrventil versehen ist, und die Sperrventile unabhängig voneinander geöffnet werden können. Die Erfindung betrifft weiterhin eine Adsorptionsvorrichtung für ein Elementaranalysegerät, wobei die Adsorptionsvorrichtung eine erste erfindungsgemäße Ventilvorrichtung und mehrere Filtereinheiten umfasst, wobei jede Filtereinheit einen Einlass und einen Auslass aufweist und die Filtereinheiten derart mit der ersten Ventilvorrichtung verbunden sind, dass jede Filtereinheit über ihren Einlass mit jeweils einem Auslass der ersten Ringleitung und einem Auslass der zweiten Ringleitung der ersten Ventilvorrichtung verbunden ist. Die Erfindung betrifft außerdem ein Verfahren zum Betrieb einer Adsorptionsvorrichtung für ein Elementaranalysegerät, umfassend die Schritte: a) Bereitstellen einer erfindungsgemäßen Adsorptionsvorrichtung; b) Durchleiten eines Probefluids durch die erste Ringleitung der ersten Ventilvorrichtung der Adsorptionsvorrichtung zu mindestens einer der Filtereinheiten der Adsorptionsvorrichtung, so dass ein Bestandteil des Probefluids in der Filtereinheit adsorbiert wird; und gegebenenfalls c) Durchleiten eines Spülfluids durch die zweite Ringleitung der ersten Ventilvorrichtung der Adsorptionsvorrichtung zu mindestens einer weiteren der Filtereinheiten der Adsorptionsvorrichtung, so dass adsorbierte Bestandteile aus der Filtereinheit ausgespült werden.

## Beschreibung

Die Erfindung betrifft eine Ventilvorrichtung, eine Adsorptionsvorrichtung für ein Elementaranalysegerät, welche die Ventilvorrichtung umfasst, und ein Verfahren zum Betrieb einer Adsorptionsvorrichtung.

### Technischer Hintergrund

Die Erfindung betrifft das Gebiet der Elementaranalysegeräte. Elementaranalysegeräte werden eingesetzt, um den Anteil bestimmter chemischer Elemente in einer Probe zu bestimmen. Derartige Geräte werden beispielsweise eingesetzt, um den Stickstoffanteil in organischen Proben, insbesondere in Lebensmittelproben zu bestimmen. Mittels des Stickstoffgehalts können beispielsweise Rückschlüsse auf den Proteingehalt einer Lebensmittelprobe gezogen werden.

Bei der Elementaranalyse von organischen Proben werden die organischen Proben zunächst durch Verbrennung in ihre elementaren Gasbestandteile zerlegt. Dabei entstehen Verbrennungsgase die, abhängig von der Probe, unterschiedliche Zusammensetzungen von Gasstoffkombinationen aufweisen. Hauptsächlich sind hier COₓ, Wasserdampf, elementarer Stickstoff und Stickoxide vorhanden. Um die COₓ- und NOₓ-Kombinationen aufzubrechen und zu einfacher handhabbaren Kombinationen reagieren zu lassen wird das Verbrennungsgas (auch Probengas genannt) erst durch einen Katalysator und dann in einem zweiten Schritt üblicherweise durch einen Reduktionsreaktor geleitet. Anschließend wird üblicherweise das Wasser mittels einer oder mehrerer Wasserfallen aus dem Probegasstrom entfernt. In einem weiteren Schritt wird CO₂ mittels einer Adsorptionsvorrichtung zur Adsorption von CO₂ aus dem Probegasstrom entfernt. Der somit erhaltene Probegasstrom enthält im Wesentlichen nur noch elementaren Stickstoff, dessen Konzentration im Probegasstrom in einem abschließenden Schritt mittels eines Detektors, üblicherweise mittels eines Wärmeleitfähigkeitsdetektors, bestimmt werden kann.

Die bekannten Adsorptionsvorrichtungen enthalten ein adsorbierendes Material, welches CO₂ aus dem Probengasstrom bindet. Als adsorbierendes Material werden beispielsweise natürliche und synthetische Zeolithe verwendet, die auch als Molekularsiebe bezeichnet werden. CO₂ wird bei Raumtemperatur auf der Oberfläche des adsorbierenden Materials gebunden. Sobald das adsorbierende Material vollständig mit CO₂ beladen ist, muss es vor einer weiteren Verwendung zunächst regeneriert werden. Die Regeneration erfolgt durch Erwärmen des adsorbierenden Materials, vorzugsweise auf Temperaturen über 220°C. Bei erhöhter Temperatur gibt das adsorbierende Material das gebundene CO₂ ab. Zur vollständigen Entfernung des CO₂ wird zusätzlich ein Spülgasstrom durch das adsorbierende Material geleitet. Nach erfolgter Regeneration wird das adsorbierende Material abgekühlt und kann erneut beladen werden.

Die Patentschrift EP 2 013 615 B1 offenbart eine Adsorptionsvorrichtung zur Adsorption von CO₂ mit einem Filter, der ein adsorbierendes Material aufweist, und einer Heizvorrichtung zum Erwärmen des adsorbierenden Materials. Die Adsorptionsvorrichtung umfasst zusätzlich eine Ventilvorrichtung, mit der abwechselnd ein Probengasstrom und ein Spülgasstrom durch den Filter geleitet werden können, wobei der Spülgasstrom in der entgegengesetzten Richtung zum Probengasstrom durch den Filter geleitet wird.

### Aufgabe der Erfindung

Es ist Aufgabe der vorliegenden Erfindung, eine verbesserte Adsorptionsvorrichtung zur Adsorption von CO₂ bereitzustellen, mit der insbesondere die Regeneration des adsorbierenden Materials effektiver und effizienter erfolgen kann. Das bedeutet, dass gebundenes CO₂ möglichst vollständig und unter minimalem Energie- und Zeitaufwand aus dem adsorbierenden Material ausgespült werden kann. Zudem soll die Adsorptionskapazität der Adsorptionsvorrichtung während des Betriebs angepasst werden können, so dass Proben mit unterschiedlichem Gehalt des zu untersuchenden Elements ohne aufwendige Umbauten auf demselben Elementaranalysegerät untersucht werden können. Zudem soll die Zeit, die zur Regeneration erforderlich ist und in der die Adsorptionsvorrichtung nicht zur Analyse einer Probe zur Verfügung steht, minimiert werden. Schließlich soll die Genauigkeit der Analyse durch Minimieren systematischer Messfehler erhöht werden.

### Beschreibung der Erfindung

Zur Lösung dieser Aufgabe offenbart die Erfindung eine Ventilvorrichtung für ein Elementaranalysegerät, eine Adsorptionsvorrichtung ein Elementaranalysegerät, welche die Ventilvorrichtung umfasst, und ein Verfahren zum Betrieb der Adsorptionsvorrichtung.

### Ventilvorrichtung

Die erfindungsgemäße Ventilvorrichtung für ein Elementaranalysegerät zeichnet sich dadurch aus, dass die Ventilvorrichtung eine erste und eine zweite Ringleitung umfasst, die erste und die zweite Ringleitung jeweils einen Einlass und mehrere Auslässe aufweisen, jeder Auslass mit einem Sperrventil versehen ist, und die Sperrventile unabhängig voneinander geöffnet werden können.

Die Ventilvorrichtung kann so verwendet werden, dass unterschiedliche Abnehmer mit den einzelnen Auslässen der beiden Ringleitungen verbunden werden und über die Einlässe der Ringleitungen unterschiedliche Fluide in die Ringleitungen und zu den Abnehmern geleitet werden. Jede der Ringleitungen der Ventilvorrichtung bildet dabei zusammen mit ihrem Einlass und den Auslässen ein Leitungssystem für ein Fluid. Vorzugsweise sind die Abnehmer jeweils mit einem Auslass der ersten Ringleitung und einem Auslass der zweiten Ringleitung verbunden. Damit können die Abnehmer wahlweise mit Fluid aus der ersten oder der zweiten Ringleitung versorgt werden. Vorzugsweise wird die Ventilvorrichtung als Teil einer Adsorbtionsvorrichtung eines Elementaranalysegeräts eingesetzt, wobei die Abnehmer die einzelnen Filtereinheiten der Adsorptionsvorrichtung sind.

Die Ventilvorrichtung ermöglicht es, über die beiden Ringleitungen zwei verschiedene Fluide zu leiten und die Fluide über die jeweiligen Auslässe der Ringleitungen jeweils unterschiedlichen Abnehmern, insbesondere den Filtereinheiten einer Adsorptionsvorrichtung, zuzuführen. Von jeder Ringleitung können somit ein oder mehrere Abnehmer mit Fluid versorgt werden. Dadurch, dass die einzelnen Auslässe jeweils von unabhängig voneinander zu öffnenden Sperrventilen verschlossen sind, können die Fluide gezielt über einzelne Auslässe geleitet werden. Dies ermöglicht eine große Flexibilität im Betrieb der Ventilvorrichtung. So können beispielsweise mehrere Abnehmer parallel mit Fluid versorgt werden. Es ist auch möglich, dass gleichzeitig eine erste Gruppe von Abnehmern mit Fluid aus der ersten Ringleitung versorgt wird, eine zweite Gruppe von Abnehmern mit Fluid aus der zweiten Ringleitung versorgt wird und eine dritte Gruppe von Abnehmern durch Schließen der jeweiligen Sperrventile von beiden Ringleitungen abgekoppelt wird.

Die Ventilvorrichtung kann für beliebige Fluide ausgelegt sein. Der Begriff "Fluid" bezeichnet im Rahmen der vorliegenden Erfindung eine Flüssigkeit oder ein Gas, oder eine Mischung mit flüssigen und gasförmigen Bestandteilen. Dabei kann ein Fluid auch Feststoffpartikel, beispielsweise Rußpartikel enthalten, so lange die Partikelgröße und Menge der Feststoffpartikel nicht zu einer Beeinträchtigung, insbesondere einer Verstopfung, der Ventilvorrichtung führen. Vorzugsweise handelt es sich bei dem Fluid um ein Gas bzw. ein gasförmiges Gemisch, besonders bevorzugt ein gasförmiges Gemisch, dass gegebenenfalls Wasserdampf enthält. Besonders bevorzugt umfasst das Fluid nur gasförmige Bestandteile.

Die Begriffe "Einlass" und "Auslass" bezeichnen im Rahmen der vorliegenden Beschreibung jeweils Anschlüsse eines Leitungssystems. Soweit nicht anders angegeben, soll mit diesen Begriffen keine Einschränkung hinsichtlich der Strömungsrichtung des in dem Leitungssystem transportierten Fluids verbunden sein. So ist es beispielsweise möglich, ein Fluid über einen als "Auslass" bezeichneten Anschluss zu einem als "Einlass" bezeichneten Anschluss zu leiten und umgekehrt.

Die Verwendung von Ringleitungen hat den Vorteil, dass der Unterschied in der Wegstrecke, welche das Fluid zwischen dem Einlass und den einzelnen Auslässen zurücklegt, minimiert wird. Dadurch wird eine gleichmäßige Verteilung des Fluids über die einzelnen Auslässe erreicht. Zudem wird bei die gesamte Leitungsstrecke durchströmt und dadurch das Totvolumen im Leitungssystem reduziert.

Jede der Ringleitungen umfasst einen Einlass und mehrere, d.h. mindestens zwei Auslässe.

Die Abstände zwischen den Einlässen und Auslässen jeder Ringleitung können je nach Bedarf angepasst werden. Als Abstand wird dabei jeweils die Wegstrecke bezeichnet, die ein Fluid zwischen Einlass und Auslass entlang der jeweiligen Ringleitung zurücklegt.

Vorzugsweise ist der Einlass jeder Ringleitung von den beiden unmittelbar benachbarten Auslässen der gleichen Ringleitung jeweils gleichmäßig beabstandet. Mit anderen Worten ist bei einer einzelnen Ringleitung die Wegstrecke, die das Fluid zwischen dem Einlass und den unmittelbar rechts und links vom Einlass angeordneten Auslässen zurücklegt, gleich groß, so dass eine gleichmäßige Verteilung des Fluids zwischen den beiden unmittelbar benachbarten Auslässen erzielt wird. Als unmittelbar benachbarte Auslässe werden die entlang der Ringleitung im Uhrzeigersinn bzw. Gegenuhrzeigersinn gesehenen nächstliegenden Auslässe bezeichnet.

Vorzugsweise ist weiterhin vorgesehen, dass die Auslässe einer Ringleitung untereinander jeweils gleichmäßig beabstandet sind. Damit werden die Wegstreckenunterschiede zwischen einzelnen Auslässen minimiert und eine gleichmäßige Verteilung des Fluids über die einzelnen Auslässe erreicht.

In einer bevorzugten Ausführungsform sind die Auslässe der beiden Ringleitungen jeweils paarweise durch jeweils eine Verbindungsleitung miteinander verbunden, wobei in jeder Verbindungsleitung ein weiterer Auslass angeordnet ist. Die Ringleitungen weisen dabei jeweils gleich viele Auslässe auf, so dass die Auslässe einander paarweise zugeordnet werden können. Jedem Paar von Auslässen wird somit eine Verbindungsleitung mit einem einzelnen Auslass zugeordnet. Durch die Verbindungsleitung können die Ringleitungen untereinander und gleichzeitig mit einer Gruppe von Abnehmern verbunden werden.

Bei dieser Ausführungsform kann jeder Auslass einer Verbindungsleitung mit einem Abnehmer verbunden werden, so dass jeder Abnehmer mit beiden Ringleitungen verbunden ist. Über jede Verbindungsleitung kann somit ein einzelner Abnehmer, z.B. eine unten beschriebene Filtereinheit, versorgt werden. Durch Steuerung der Sperrventile an den einzelnen Auslässen der Ringleitungen kann für jeden Abnehmer unabhängig voneinander bestimmt werden, mit welchem der beiden Fluide der Abnehmer versorgt wird. Es ist somit möglich, gleichzeitig einen oder mehrere Abnehmer mit dem Fluid aus der ersten Ringleitung und einen oder mehrere weitere Abnehmer mit dem Fluid aus der zweiten Ringleitung zu versorgen.

Vorzugsweise ist bei jeder Verbindungsleitung vorgesehen, dass der Auslass der Verbindungsleitung von den beiden verbundenen Auslässen der beiden Ringleitungen gleichmäßig beabstandet ist, so dass die Weglänge zwischen dem Auslass der Verbindungsleitung und den beiden Ringleitungen gleich ist.

Die Sperrventile sind vorzugsweise elektronisch oder pneumatisch gesteuert. Die Ventilsteuerung kann somit mit einer elektronischen Steuereinheit verbunden werden, welche die Sperrventile automatisch und unabhängig voneinander öffnet und schließt. Die Steuerung der Sperrventile erfolgt vorzugsweise nach einem vorgegebenen Programm.

Bei den Sperrventilen handelt es sich um 2/2-Wege-Ventile, die jeweils einen Eingang und einen Ausgang aufweisen und zwischen einem geschlossenen und einem offenen Zustand geschaltet werden können. Vorzugsweise sind die Sperrventile im spannungsfreien Zustand geschlossen. Dies hat den Vorteil, dass die Fluidzufuhr zu den mit den Ringleitungen verbundenen Abnehmern bei einem Ausfall der Energieversorgung automatisch unterbrochen wird und somit eine mögliche Verunreinigung der Abnehmer verhindert werden kann.

In einer bevorzugten Ausführungsform bilden die beiden Ringleitungen sowie die jeweils mit den Ringleitungen verbundenen Ein- und Auslässe eine bauliche Einheit. Beispielsweise können die beiden Ringleitungen in Form von Bohrungen in einem quaderförmigen Block, beispielsweise einem Kunststoff- oder Metallblock, ausgebildet werden. Beide Ringleitungen sind dabei in einem Block und damit in einer baulichen Einheit zusammengefasst. Vorzugsweise ist der Block aus Metall, insbesondere aus Messing, gefertigt. Die Einlässe der beiden Ringleitungen sind vorzugsweise an gegenüberliegenden Seitenflächen des Blocks vorgesehen. Die Auslässe der beiden Ringleitungen sind vorzugsweise gemeinsam auf einer Seitenfläche vorgesehen, besonders bevorzugt auf der Seitenfläche, die zwischen den beiden Seitenflächen mit den Einlässen angeordnet ist. Die Sperrventile sind in dieser Ausführungsform vorzugsweise auf der Seitenfläche mit den Auslässen befestigt, und können dort beispielsweise aufgesteckt oder aufgeschraubt sein. Ferner ist bei dieser Variante bevorzugt, dass die Auslässe der beiden Ringleitungen wie oben beschrieben paarweise mit einer Verbindungsleitung verbunden sind, die über einen weiteren Auslass verfügt. Die Verbindungsleitungen sind ebenfalls in Form von Bohrungen in dem Block ausgeführt. Die Verbindungsleitungen verlaufen von der Seitenfläche mit den Sperrventilen aus in den Metallblock. Die Auslässe der Verbindungsleitungen sind vorzugsweise auf der gleichen Seitenfläche wie die Sperrventile angeordnet.

### Adsorptionsvorrichtung

Die erfindungsgemäße Adsorptionsvorrichtung für ein Elementaranalysegerät umfasst eine erste Ventilvorrichtung der oben beschriebenen Art und mehrere Filtereinheiten, wobei jede Filtereinheit einen Einlass und einen Auslass aufweist, dadurch gekennzeichnet, dass die Filtereinheiten derart mit der ersten Ventilvorrichtung verbunden sind, dass jede Filtereinheit über ihren Einlass mit jeweils einem Auslass der ersten Ringleitung und einem Auslass der zweiten Ringleitung der ersten Ventilvorrichtung verbunden ist.

Durch den Einsatz der oben beschriebenen Ventilvorrichtung im Rahmen einer Adsorptionsvorrichtung ist es möglich, die Vorteile der Ventilvorrichtung im Rahmen eines Elementaranalysegeräts nutzbar zu machen. Insbesondere ist es mit Hilfe der Ventilvorrichtung möglich, unterschiedliche Fluide über die beiden Ringleitungen der Ventilvorrichtung zu einzelnen Filtereinheiten zu leiten. Beispielsweise kann über die erste Ringleitung ein Probefluid zu einer oder mehrerer Filtereinheiten geleitet werden, um einen Bestandteil des Probefluids durch Adsorption aus dem Probefluid zu entfernen, und gleichzeitig über die zweite Ringleitung ein Spülfluid zu einer oder mehrerer weiterer Filtereinheiten geleitet werden, um die weiteren Filtereinheiten zu regenerieren.

Die Adsorptionsvorrichtung umfasst zwei oder mehr Filtereinheiten. Es ist somit möglich, eine der Filtereinheiten mit einem Probefluid zu beaufschlagen und gleichzeitig ein Spülfluid durch eine zweite Filtereinheit zu leiten. Ein oder mehrere Filtereinheiten werden somit zum Entfemen eines Bestandteils aus einem Probefluid eingesetzt, während eine oder mehrere weitere Filtereinheiten gleichzeitig regeneriert werden. Auf diese Weise ist es möglich, Ausfallzeiten im Betrieb der Adsorptionsvorrichtung zu verringern. Vorzugsweise umfasst die Adsorptionsvorrichtung zwei bis zehn Filtereinheiten, besonders bevorzugt vier bis acht Filtereinheiten, am meisten bevorzugt sechs Filtereinheiten.

Die Filtereinheiten weisen jeweils einen Einlass für ein Fluid, einen Auslass für ein Fluid und einen Filter mit einem adsorbierenden Material auf, das von dem Fluid durchströmt werden kann. Die Form der Filtereinheiten ist nicht näher festgelegt. Es können beispielsweise aus dem Stand der Technik bekannte U-förmige Filtereinheiten mit außenliegender Heizvorrichtung eingesetzt werden. Es ist gleichermaßen möglich, spiralförmige oder gerade Filtereinheiten mit innenliegender Heizvorrichtung zu verwenden.

Des Weiteren weisen die Filtereinheiten vorzugsweise jeweils eine Heizvorrichtung auf, mit der das adsorbierende Material erwärmt werden kann. Mittels der Heizvorrichtung kann das adsorbierende Material während der Regenerationsphase erwärmt werden, um die aus dem Probefluid adsorbierten Bestandteile zu desorbieren und mittels des Spülfluids aus dem adsorbierenden Material zu spülen.

Die Filtereinheiten weisen vorzugsweise zusätzlich eine Kühlvorrichtung zum Kühlen des adsorbierenden Materials auf. Mit Hilfe der Kühlvorrichtung ist es möglich, das adsorbierende Material nach erfolgter Regeneration innerhalb kurzer Zeit wieder auf die zur Adsorption von Bestandteilen des Probefluids erforderliche Temperatur abzukühlen und somit betriebsbereit zu stellen. Die Kühlvorrichtung ist vorzugsweise ein Ventilator.

Bei dem adsorbierenden Material handelt es sich vorzugsweise um ein CO₂-adsorbierendes Material. Dieses eignet sich zum Entfernen von CO₂ aus einem Probefluid, vorzugsweise aus einem gasförmigen Probefluid. Vorzugsweise wird als adsorbierendes Material ein Molekularsieb eingesetzt. Besonders bevorzugt besteht das adsorbierende Material aus natürlichen oder synthetischen Zeolithen. Zur Verbesserung der Adsorptionseigenschaften kann das adsorbierende Material auch beschichtet sein.

In einer bevorzugten Ausführungsform umfasst die Adsorptionsvorrichtung eine zweite Ventilvorrichtung der oben beschriebenen Art, wobei die Filtereinheiten derart mit der zweiten Ventilvorrichtung verbunden sind, dass jede Filtereinheit über ihren Auslass mit jeweils einem Auslass der ersten Ringleitung und einem Auslass der zweiten Ringleitung der zweiten Ventilvorrichtung verbunden ist.

In dieser Ausführungsform umfasst die Adsorptionsvorrichtung somit insgesamt vier Ringleitungen, von denen jeweils zwei mit den Einlässen der Filtereinheiten und jeweils zwei mit den Auslässen der Filtereinheiten verbunden sind.

Diese Ausführungsform ermöglicht es, das Fluid nach Durchströmen der Filtereinheiten über eine der beiden Ringleitungen der zweiten Ventilvorrichtung zu unterschiedlichen Abnehmern weiterzuleiten. Beispielsweise kann das Fluid nach Durchströmen der Filtereinheiten über die erste Ringleitung der zweiten Ventilvorrichtung zu einem Detektor geleitet werden. Alternativ kann das Fluid nach Durchströmen der Filtereinheiten über die zweite Ringleitung der zweiten Ventilvorrichtung zu einem zweiten Detektor oder einem Auslass geleitet werden.

Dadurch, dass die Sperrventile der zweiten Ventilvorrichtung ebenso wie diejenigen der ersten Ventilvorrichtung unabhängig voneinander geöffnet oder geschlossen werden können, kann das Fluid aus unterschiedlichen Filtereinheiten zu unterschiedlichen Abnehmern weitergeleitet werden. Beispielsweise kann ein Probefluid über die erste Ringleitung der ersten Ventilvorrichtung an eine oder mehrere erste Filtereinheiten und von dort über die erste Ringleitung der zweiten Ventilvorrichtung an einen Detektor weitergeleitet werden, während gleichzeitig ein Spülfluid über die zweite Ringleitung der ersten Ventilvorrichtung an eine oder mehrere zweite Filtereinheiten und von dort über die zweite Ringleitung der zweiten Ventilvorrichtung an einen Auslass weitergeleitet werden kann.

Bei den vorangehend beschriebenen Beispielen werden die Fluide jeweils über die Einlässe der Ringleitungen der ersten Ventilvorrichtung in die Adsorptionsvorrichtung eingespeist und verlassen die Adsorptionsvorrichtung über die Einlässe der Ringleitungen der zweiten Ventilvorrichtung. Die Fluide durchströmen dabei die Filtereinheiten jeweils in der gleichen Richtung. Es ist allerdings auch möglich, die Adsorptionseinheit so einzustellen, dass ein erstes Fluid über die erste Ringleitung der ersten Ventilvorrichtung zu den Filtereinheiten und von dort zu der ersten Ringleitung der zweiten Ventilvorrichtung geleitet wird, während ein zweites Fluid über die zweite Ringleitung der zweiten Ventilvorrichtung zu den Filtereinheiten und von dort zu der zweiten Ringleitung der ersten Ventilvorrichtung geleitet wird. Die Fluide durchströmen in dieser Ausführungsform die Filtereinheiten gegenläufig.

Um die Wegstreckenunterschiede zwischen den Filtereinheiten und den beiden Ringleitungen zu minimieren, sind die Einlässe der Filtereinheiten von den jeweils verbundenen Auslässen der Ringleitungen vorzugsweise gleichmäßig beabstandet. Gleiches gilt für die Abstände zwischen den Auslässen der Filtereinheiten und den damit verbundenen Auslässen der zweiten Ventilvorrichtung, sofern eine zweite Ventilvorrichtung vorgesehen ist.

Die Adsorptionsvorrichtung umfasst vorzugsweise eine elektronische Steuereinheit, mit der die Sperrventile der ersten und der ggf. vorhandenen zweiten Ventilvorrichtung gesteuert werden können. Die Steuereinheit ist vorzugsweise auch mit den Heizvorrichtungen und den ggf. vorhandenen Kühlvorrichtungen der Filtereinheiten verbunden, so dass die Steuerung der Sperrventile sowie der Heiz- und Kühlvorrichtungen von einer zentralen Steuereinheit übernommen wird.

Die Adsorptionsvorrichtung ist vorzugsweise zum Einsatz in einem Elementaranalysegerät bestimmt, bevorzugt zum Einsatz in einem Elementaranalysegerät zur Analyse organischer Proben, besonders bevorzugt zum Einsatz in einem Elementaranalysegerät zur Analyse von Lebensmittelproben, am meisten bevorzugt zum Einsatz in einem Elementaranalysegerät zur Bestimmung des Stickstoffgehalts in einer Lebensmittelprobe. Die Adsorptionsvorrichtung kann jedoch auch für beliebige andere Anwendungen, bei denen eine Komponente, insbesondere CO₂, aus einem Fluid entfernt werden muss, bestimmt und entsprechend angepasst sein.

Die Adsorptionsvorrichtung ist für die Adsorption von Bestandteilen aus einem beliebigen Fluid bestimmt. Das Fluid kann flüssige und gasförmige Bestandteile aufweisen. Darüber hinaus kann das Fluid auch Feststoffpartikel, beispielsweise Rußpartikel enthalten, so lange die Partikelgröße und Menge der Feststoffpartikel nicht zu einer Beeinträchtigung des adsorbierenden Materials führen. Vorzugsweise handelt es sich bei dem Fluid um ein Gas bzw. ein gasförmiges Gemisch, besonders bevorzugt ein gasförmiges Gemisch, dass gegebenenfalls Wasserdampf enthält, am meisten bevorzugt umfasst das Fluid nur gasförmige Bestandteile.

### Verfahren zum Betrieb einer Adsorptionsvorrichtung

Das erfindungsgemäße Verfahren zum Betrieb einer Adsorptionsvorrichtung für ein Elementaranalysegerät umfasst die Schritte:
a) Bereitstellen einer oben beschriebenen Adsorptionsvorrichtung;
b) Durchleiten eines Probefluids durch die erste Ringleitung der ersten Ventilvorrichtung der Adsorptionsvorrichtung zu mindestens einer der Filtereinheiten der Adsorptionsvorrichtung, so dass ein Bestandteil des Probefluids in der Filtereinheit adsorbiert wird;
   und gegebenenfalls
c) Durchleiten eines Spülfluids durch die zweite Ringleitung der ersten Ventilvorrichtung der Adsorptionsvorrichtung zu mindestens einer weiteren der Filtereinheiten der Adsorptionsvorrichtung, so dass adsorbierte Bestandteile aus der Filtereinheit ausgespült werden.

Beim Durchleiten des Probefluids durch die erste Ringleitung werden die Sperrventile derjenigen Auslässe der ersten Ringleitung geöffnet, die mit den Filtereinheiten verbunden sind, die zur Adsorption bestimmt sind. Die übrigen Sperrventile der ersten Ringleitung sowie die Sperrventile der entsprechenden Auslässe der zweiten Ringleitung bleiben dabei geschlossen.

Beim Durchleiten des Spülfluids durch die zweite Ringleitung werden die Sperrventile derjenigen Auslässe der zweiten Ringleitung geöffnet, die mit den Filtereinheiten verbunden sind, die zur Regeneration bestimmt sind. Die übrigen Sperrventile der zweiten Ringleitung sowie die Sperrventile der entsprechenden Auslässe der ersten Ringleitung bleiben dabei geschlossen.

Es ist auch möglich, dass eine oder mehrere Filtereinheiten durch Schließen der entsprechenden Sperrventile vollständig von der ersten und zweiten Ringleitung getrennt werden, während Probefluid bzw. Spülfluid durch andere Filtereinheiten durchgeleitet werden.

Die Schritte b) und c) können gleichzeitig oder zeitversetzt durchgeführt werden. Vorzugsweise werden sie im Betrieb der Adsorptionsvorrichtung gleichzeitig oder zumindest mit einer zeitlichen Überschneidung durchgeführt, um die Ausfallzeiten der zu regenerierenden Filtereinheiten zu minimieren. Sofern sie mit zeitlicher Überschneidung durchgeführt werden, wird das Spülfluid in Schritt c) durch eine andere Filtereinheit als das Probefluid in Schritt b) geleitet. Sofern die Schritte ohne zeitliche Überschneidung durchgeführt werden, kann es sich bei der Filtereinheit in den Schritten b) und c) auch um dieselbe Filtereinheit handeln.

In einer bevorzugten Ausführungsform wird das Probefluid gleichzeitig durch zwei oder mehr Filtereinheiten geleitet, so dass ein Bestandteil des Probefluids in den Filtereinheiten adsorbiert wird. Auf diese Weise ist es möglich, die Adsorptionskapazität zu vervielfachen.

In einer weiteren Ausführungsform wird eine Adsorptionsvorrichtung eingesetzt, die eine zweite Ventilvorrichtung wie oben beschrieben aufweist. In dieser Ausführungsform umfasst das Verfahren den Schritt, dass das Probefluid nachdem es durch die mindestens eine Filtereinheit geleitet wurde in die erste Ringleitung der zweiten Ventilvorrichtung geleitet und von dort zu einem Detektor weitergeleitet wird. Dies geschieht durch Öffnen der Sperrventile derjenigen Auslässe der ersten Ringleitung der zweiten Ventilvorrichtung, die mit dem Auslass der betreffenden Filtereinheit verbunden sind, und Schließen der entsprechenden Auslässe der zweiten Ringleitung der zweiten Ventilvorrichtung.

In einer weiteren Ausführungsform wird das Spülfluid, nachdem es durch eine oder mehrere Filtereinheiten geleitet wurde, durch einen zusätzlichen Detektor zum Nachweis des desorbierten Bestandteils geleitet. Auf diese Weise ist es möglich, die Menge des ursprünglich adsorbierten Bestandteils zu bestimmen und somit Rückschlüsse auf die Menge des Bestandteils im Probefluid zu ziehen. Vorzugsweise wird zu diesem Zweck eine zweite Ventilvorrichtung wie oben beschrieben eingesetzt, wobei das Spülfluid durch die zweite Ringleitung der zweiten Ventilvorrichtung und von dort zu dem zusätzlichen Detektor geleitet wird. Es ist auch möglich, das Spülfluid, nachdem es durch eine oder mehrere Filtereinheiten geleitet wurde, zu dem gleichen Detektor wie das Probefluid zu leiten. Vorzugsweise wird zu diesem Zweck eine zweite Ventilvorrichtung wie oben beschrieben eingesetzt, wobei das Spülfluid durch die erste Ringleitung der zweiten Ventilvorrichtung und von dort zu dem Detektor geleitet wird.

Das Verfahren eignet sich zum Entfernen von Bestandteilen aus einem beliebigen Fluidstrom, der im Rahmen des Verfahrens als Probefluid bezeichnet wird. Der Fluidstrom kann flüssige und gasförmige Bestandteile aufweisen. Darüber hinaus kann der Fluidstrom auch Feststoffpartikel, beispielsweise Rußpartikel enthalten, solange die Partikelgröße und Menge der Feststoffpartikel nicht zu einer Beeinträchtigung des adsorbierenden Materials führen. Vorzugsweise handelt es sich bei dem Fluidstrom um ein Gas oder ein gasförmiges Gemisch, besonders bevorzugt handelt es sich um ein gasförmiges Gemisch, dass gegebenenfalls Wasserdampf enthält, am meisten bevorzugt umfasst der Fluidstrom nur gasförmige Bestandteile. Das Verfahren dient vorzugsweise zum Entfernen von CO₂ aus einem Probefluid.

In einer Ausführungsform handelt es sich bei dem Probefluid um einen CO₂-haltige Fluidstrom, der durch Verbrennung einer Probe, vorzugsweise einer organischen Probe, besonders bevorzugt einer Lebens- oder Futtermittelprobe, erhalten wird. Vorzugsweise wird der Fluidstrom durch folgende Schritte erhalten:
Verbrennen einer Probe in einem Verbrennungsreaktor, um ein Analysefluid zu erhalten; Durchleiten des Analysefluids durch einen Reduktionsreaktor, um oxidierte Bestandteile des Analysefluids zu reduzieren; Durchleiten des Analysefluids durch einen Wasserabscheider, um Wasser aus dem Analysefluid zu entfernen.

Vorzugsweise wird der CO₂-haltige Fluidstrom bei einer Temperatur von 10°C bis 40°C, vorzugsweise einer Temperatur von 15°C bis 30°C, besonders bevorzugt einer Temperatur 18°C bis 25°C durch die Filtereinheiten der Adsorptionsvorrichtung geleitet, sodass CO₂ aus dem Fluidstrom durch das adsorbierende Material adsorbiert wird.

Nachdem der CO₂-haltige Fluidstrom durch die Adsorptionsvorrichtung durchgeleitet wurde, wird das adsorbierte CO₂ aus dem adsorbierenden Material ausgespült, indem das adsorbierende Material mittels der Heizvorrichtung erwärmt und ein Spülfluidstrom durch die Adsorptionsvorrichtung durchgeleitet wird. Vorzugsweise wird das adsorbierende Material dabei auf eine Kerntemperatur zwischen 100°C und 300°C, bevorzugt 150°C und 250°C, besonders bevorzugt 180°C und 220°C erwärmt. In einer besonders bevorzugten Ausführungsform wird das adsorbierende Material zunächst auf die angegebene Kerntemperatur erwärmt und anschließend der Spülfluidstrom durch die Adsorptionsvorrichtung und durch das adsorbierende Material hindurchgeleitet.

Beim Erwärmen des adsorbierenden Materials kann es durch Freisetzung des adsorbierten Bestandteils und Wärmeausdehnung des Fluids zu einem Druckanstieg in der Filtereinheit kommen. Um diesen Druckanstieg auszugleichen, wird die Filtereinheit beim Erwärmen vorzugsweise entlüftet. Sofern eine zweite Ventilvorrichtung wie oben beschrieben eingesetzt wird, erfolgt das Entlüften vorzugsweise über die zweite Ringleitung der zweiten Ventilvorrichtung durch Öffnen des entsprechenden Sperrventils.

Als Spülfluid wird vorzugsweise ein Fluid eingesetzt, dass selbst keine Bestandteile enthält, die von dem adsorbierenden Material adsorbiert werden oder mit dem adsorbierenden Material chemisch reagieren. Vorzugsweise handelt es sich bei dem Spülfluid um ein Edelgas, beispielsweise Helium oder Argon. In einer bevorzugten Ausführungsform wird Helium als Spülfluid eingesetzt.

In einer bevorzugten Ausführungsform umfassen die Filtereinheiten der Adsorptionsvorrichtung eine oben beschriebene Kühlvorrichtung. In diesem Fall umfasst das Verfahren den zusätzlichen Schritt des Abkühlens des adsorbierenden Materials mittels der Kühlvorrichtung, nachdem der adsorbierte Bestandteil aus dem adsorbierenden Material ausgespült wurde. Beim Abkühlen des adsorbierenden Materials mittels der Kühlvorrichtung kann der Spülfluidstrom abgeschaltet sein oder weiter durch das adsorbierende Material durchgeleitet werden.

In einer weiteren Ausführungsform wird das Probefluid gleichartiger Proben stets über dieselbe Filtereinheit der Adsorptionsvorrichtung geleitet. Auf diese Weise ist es möglich, systematische Messfehler, die aufgrund individueller Unterschiede zwischen den Filtereinheiten auftreten können, zu minimieren bzw. gänzlich auszuschließen. Vorzugsweise umfasst die Adsorptionsvorrichtung zu diesem Zweck eine elektronische Speichereinheit zum Speichern von Identifikationsdaten von Proben und Filtereinheiten. Somit ist es möglich, Proben anhand ihrer Identifikationsdaten einer bestimmten Filtereinheiten zuzuordnen.

Weitere Merkmale der Erfindung werden anhand der nachfolgend beschriebenen Zeichnungen dargestellt:
- Figur 1: Schematische Darstellung einer Adsorptionsvorrichtung im Ruhezustand
- Figur 2: Schematische Darstellung einer Adsorptionsvorrichtung beim Durchleiten eines Probefluids durch eine Filtereinheit
- Figur 3: Schematische Darstellung einer Adsorptionsvorrichtung beim Durchleiten eines Spülfluids durch eine Filtereinheit
- Figur 4: Schematische Darstellung einer Adsorptionsvorrichtung beim gleichzeitigen Durchleiten eines Probefluids durch zwei Filtereinheiten

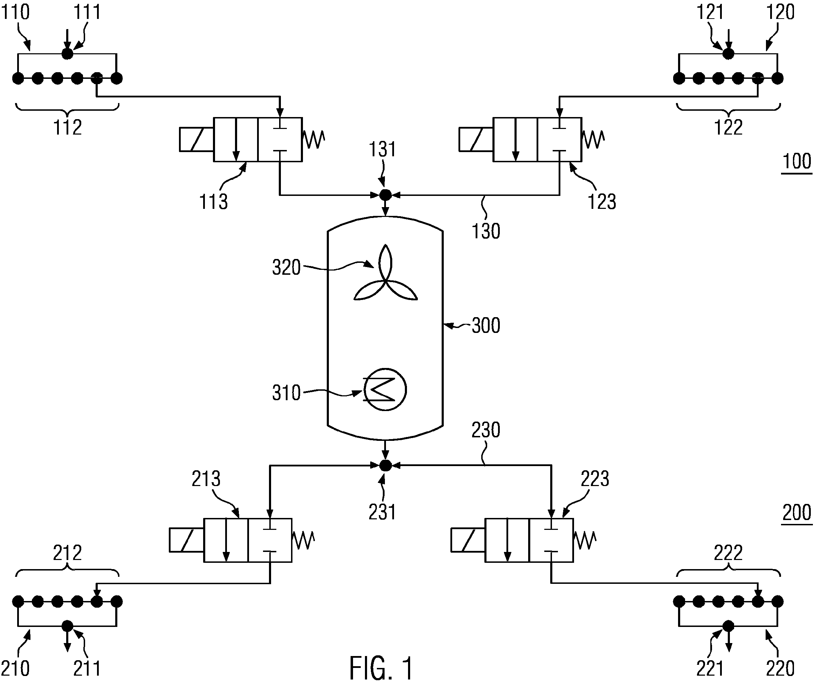

Die Figuren 1 bis 4 zeigen jeweils schematische Darstellungen einer Adsorptionseinheit 1 in unterschiedlichen Betriebszuständen.

Die Adsorptionseinheit 1 weist eine erste Ventilvorrichtung 100 auf, welche die beiden Ringleitungen 110, 120 umfasst. Die Ringleitung 110 hat einen Einlass 111 und sechs Auslässe 112. Die Ringleitung 120 hat entsprechend einen Einlass 121 und ebenfalls sechs Auslässe 122. In dem hier gezeigten Beispiel dient die Ringleitung 110 zur Durchleitung eines Probefluids, das durch den Einlass 111 in die Ringleitung 110 eingespeist wird. Das Probefluid ist in dem hier beschriebenen Beispiel ein CO₂-haltiges gasförmiges Gemisch, dass durch Verbrennung einer Lebensmittelprobe erhalten wird. Die Ringleitung 120 dient zur Durchleitung eines Spülfluids, das durch den Einlass 121 eingespeist wird. Das Spülfluid ist hierbei ein inertes Gas, dass zum Ausspülen von CO₂ aus dem unten beschriebenen adsorbierenden Material verwendet wird.

Die Ringleitungen 110, 120 sind in der schematischen Darstellung der Figuren 1 bis 4 zur besseren Übersicht räumlich getrennt dargestellt. In dem hier beschriebenen Beispiel bilden die Ringleitungen 110, 120 jedoch tatsächlich eine bauliche Einheit.

Die Auslässe 112, 122 der beiden Ringleitungen 110, 120 sind jeweils mit Sperrventilen 113, 123 versehen, von denen in den Figuren 1 bis 3 jeweils eines pro Ringleitung schematisch dargestellt ist. Die übrigen Sperrventile sind zur besseren Übersicht nicht dargestellt.

Die Auslässe der Sperrventile 113, 123 sind über eine Verbindungsleitung 130 miteinander verbunden. Damit sind gleichzeitig die den Sperrventile 113, 123 zugeordneten Auslässe 112, 122 der beiden Ringleitungen 110, 120 miteinander verbunden. Die Ventilvorrichtung 100 weist insgesamt sechs Verbindungsleitungen 130 auf, von denen in den Figuren 1 bis 3 lediglich eine gezeigt ist. Die einzelnen Verbindungsleitungen 130 verbinden jeweils zwei Sperrventile 113, 123 und die entsprechenden Auslässe 112, 122 der Ringleitungen 110, 120 paarweise miteinander.

Jede der Verbindungsleitungen 130 weist einen zusätzlichen Auslass 131 auf, der mit einer Filtereinheit 300 verbunden ist. Die Adsorptionsvorrichtung 1 umfasst insgesamt sechs Filtereinheiten 300, von denen in den Figuren 1 bis 3 lediglich eine gezeigt ist. Jede der Filtereinheiten 300 umfasst eine Heizvorrichtung 310 und eine Kühlvorrichtung 320. Die Filtereinheiten 300 umfassen ein adsorbierendes Material zur Adsorption eines Bestandteils aus dem Probefluid. In dem hier gezeigten Beispiel handelt es sich dabei um ein CO₂-adsorbierendes Material.

Die Adsorptionsvorrichtung 1 umfasst in dem hier gezeigten Beispiel eine zweite Ventilvorrichtung 200, die entsprechend zu der ersten Ventilvorrichtung 100 aufgebaut ist. Die zweite Ventilvorrichtung 200 umfasst zwei Ringleitungen 210, 220, die jeweils einen Einlass 211, 221 und sechs Auslässe 212, 222 aufweisen. Wie bei der ersten Ventilvorrichtung 100, bilden die Ringleitungen 210, 220 der zweiten Ventilvorrichtung 200 eine bauliche Einheit. Die Auslässe 212, 222 sind mit Sperrventilen 213, 223 versehen, von denen in den Figuren 1 bis 3 nur jeweils eines pro Ringleitung dargestellt ist. Die Sperrventile 213, 223 sind jeweils paarweise über Verbindungsleitungen 230 verbunden, von denen in den Figuren 1 bis 3 lediglich eine dargestellt ist. Jede Verbindungsleitung 230 weist einen zusätzlichen Auslass 231 auf, der jeweils mit dem Auslass einer Filtereinheit 300 verbunden ist.

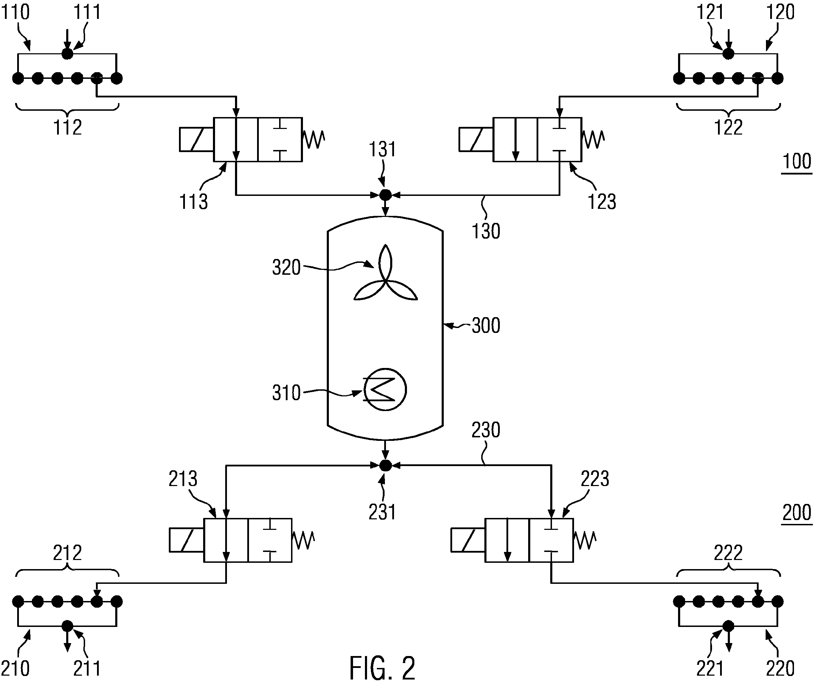

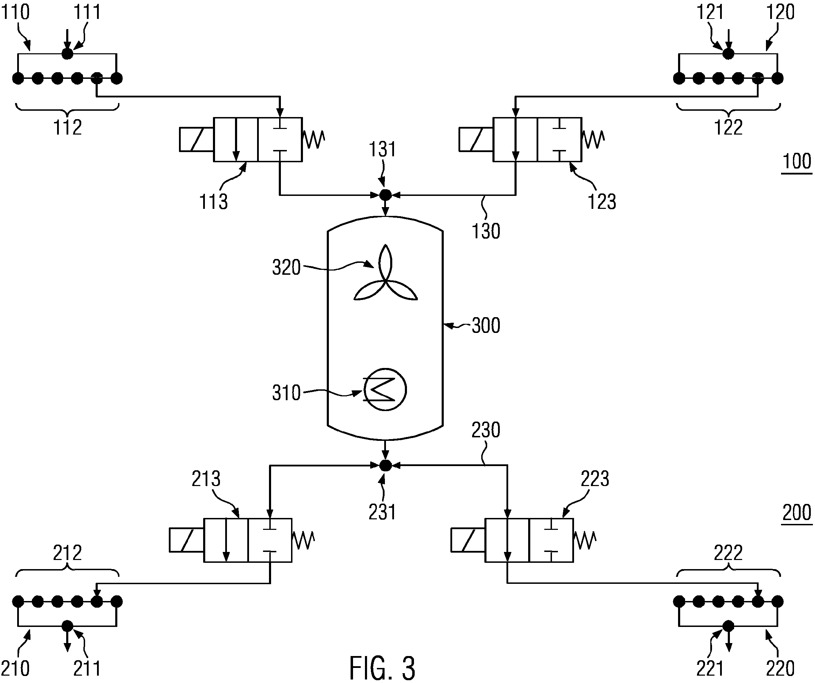

Figur 1 zeigt die Adsorptionsvorrichtung 1 in einem Ruhezustand in Bezug auf eine Filtereinheit. In diesem Zustand sind sämtliche Sperrventile 113, 123, 213, 223, die zu der gezeigten Filtereinheit 300 führen, geschlossen, so dass kein Fluid durch die gezeigte Filtereinheit 300 geleitet wird. Die gezeigte Filtereinheit 300 befindet sich somit im Ruhezustand. Dadurch dass die Sperrventile 113, 123, 213, 223 unabhängig voneinander geöffnet bzw. geschlossen werden können, ist es möglich, dass nur einige der insgesamt sechs Filtereinheiten 300 im Ruhezustand sein können, während gleichzeitig andere Filtereinheiten in einem der in den Figuren 2 und 3 dargestellten Zuständen sein können.

Der Ruhezustand dient in Verbindung mit einer Steuerung der Heizvorrichtung 310 und der Kühlvorrichtung 320 insbesondere zur Vorbereitung der nachfolgend beschriebenen Adsorptions- oder Regenerationsphase. Vorteilhafterweise wird die Filtereinheit 300 nach erfolgter Adsorption durch Schließen der Sperrventile 113, 123, 213, 223 in den Ruhezustand versetzt und während des Ruhezustands die Heizvorrichtung 310 aktiviert, um das adsorbierende Material auf die zur Regeneration erforderliche Temperatur zu erwärmen. Vorzugsweise wird beim Erwärmen das Sperrventil 223 zumindest zeitweise geöffnet, damit die Filtereinheit 300 über die Ringleitung 220 entlüftet und ein Überdruck in der Filtereinheit 300 verhindert werden kann. Entsprechend wird die Filtereinheit 300 nach erfolgter Regeneration erneut in den Ruhezustand versetzt und währenddessen die Kühlvorrichtung 320 aktiviert, um das adsorbierende Material auf die zur Adsorption erforderliche Temperatur abzukühlen.

Figur 2 zeigt die Adsorptionsvorrichtung 1 beim Durchleiten des Probefluids durch eine Filtereinheit 300. In diesem Zustand findet die Adsorption statt, das heißt ein Bestandteil des Probefluids, in diesem Beispiel CO₂, wird durch Bindung an das adsorbierende Material der Filtereinheit 300 aus dem Probefluid entfernt. Zu diesem Zweck wird das Sperrventil 113 geöffnet, während das Sperrventil 123 geschlossen bleibt. Dadurch gelangt Probefluid aus der ersten Ringleitung 110 in die Filtereinheit 300. Die Heizvorrichtung 310 ist hierbei inaktiv, die Kühlvorrichtung 320 kann gegebenenfalls aktiviert werden, um das adsorbierende Material abzukühlen. In der zweiten Ventilvorrichtung 200 wird gleichzeitig das Sperrventil 213 geöffnet, während das Sperrventil 223 geschlossen bleibt. Dadurch gelangt das Probefluid, nachdem es die Filtereinheit 300 durchströmt hat, in die Ringleitung 210 der zweiten Ventilvorrichtung 200. Über den Einlass 211 verlässt das Probefluid die zweite Ventilvorrichtung 200.

In dem hier beschriebenen Beispiel ist der Einlass 211 mit einem Detektor zum Nachweis von Stickstoff in dem Probefluid verbunden. Das Probefluid gelangt somit zu dem Detektor, nachdem CO₂ durch die Filtereinheit 300 entfernt wurde.

Figur 3 zeigt die Adsorptionsvorrichtung 1 beim Durchleiten des Spülfluids durch eine Filtereinheit 300. In diesem Zustand findet die Regeneration statt, das heißt der adsorbierte Bestandteil, in diesem Beispiel CO₂, wird bei erhöhter Temperatur von dem adsorbierenden Material desorbiert und aus der Filtereinheit 300 gespült. Zu diesem Zweck wird das Sperrventil 123 geöffnet, während das Sperrventil 113 geschlossen bleibt. Dadurch gelangt Spülfluid aus der zweiten Ringleitung 120 in die Filtereinheit 300. Die Heizvorrichtung 310 ist hierbei aktiv, um das adsorbierende Material zu erwärmen, die Kühlvorrichtung 320 ist inaktiv. In der zweiten Ventilvorrichtung 200 wird gleichzeitig das Sperrventil 223 geöffnet, während das Sperrventil 213 geschlossen bleibt. Dadurch gelangt das Spülfluid, nachdem es die Filtereinheit 300 durchströmt hat, in die Ringleitung 220 der zweiten Ventilvorrichtung 200. Über den Einlass 221 verlässt das Spülfluid die zweite Ventilvorrichtung 200.

In dem hier beschriebenen Beispiel kann der Einlass 221 mit einem Detektor zum Nachweis von CO₂ in dem Spülfluid verbunden sein. Das Spülfluid, welches das ausgespülte CO₂ enthält, gelangt somit zu dem Detektor zum Nachweis von CO₂, so dass die Menge an ausgespültem CO₂ gemessen werden kann. Alternativ wird das Spülfluid über den Einlass 221 aus der Adsorptionsvorrichtung 1 geleitet und verworfen.

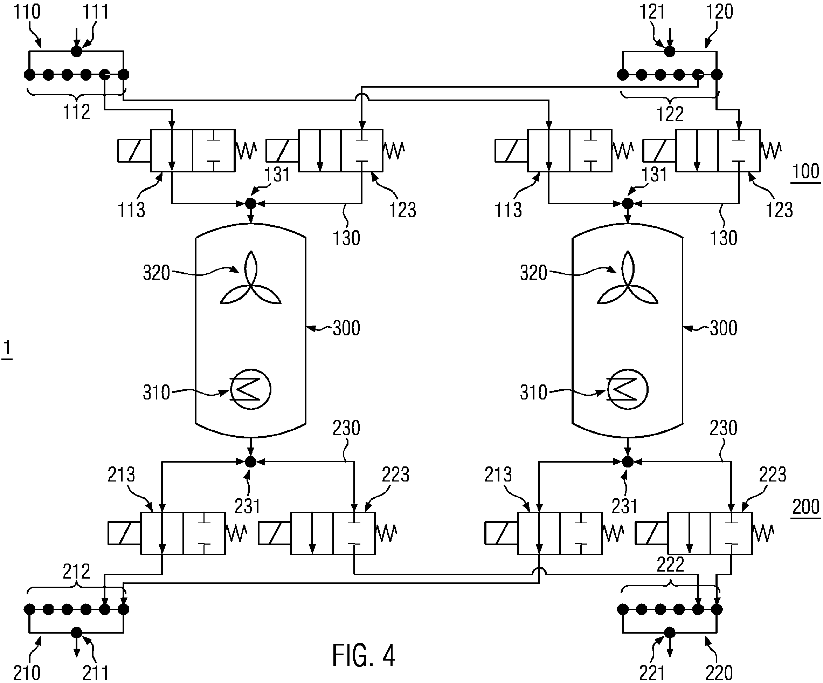

Figur 4 zeig die Adsorptionsvorrichtung 1 beim gleichzeitigen Durchleiten eines Probefluids durch zwei Filtereinheiten 300. Die Adsorptionsvorrichtung 1 hat hierbei grundsätzlich den gleichen Aufbau wie in den Figuren 1 bis 3. Allerdings sind zur Verdeutlichung in Figur 4 zwei der insgesamt sechs Filtereinheiten 300 zusammen mit den daran angeschlossenen Sperrventilen 113, 123, 213, 223 explizit dargestellt. In dem in Figur 4 gezeigten Zustand sind zwei Sperrventile 113 geöffnet, während die entsprechenden Sperrventile 123 geschlossen sind. Dadurch wird das Probefluid aus der ersten Ringleitung 110 gleichzeitig durch zwei Filtereinheiten 300 geleitet. Die Filtereinheiten 300 sind parallelgeschaltet. Dies verdoppelt die zur Verfügung stehende Menge an adsorbierenden Material und damit die Adsorptionskapazität zur Adsorption von CO₂. Die Filtereinheiten 300 befinden sich somit beide im Adsorptionsmodus, ähnlich wie die in Figur 2 gezeigte Filtereinheit. Die Heizvorrichtungen 310 sind hierbei inaktiv, die Kühlvorrichtungen 320 können gegebenenfalls aktiviert werden, um das adsorbierende Material abzukühlen. In der zweiten Ventilvorrichtung 200 werden gleichzeitig die Sperrventile 213 geöffnet, während die Sperrventile 223 geschlossen bleiben. Dadurch gelangen die beiden Probefluidströme aus den Filtereinheiten 300 gemeinsam in die Ringleitung 210 der zweiten Ventilvorrichtung 200. Über den Einlass 211 verlässt das vereinigte Probefluid die zweite Ventilvorrichtung 200 und kann wie oben beschrieben zu einem Detektor weitergeleitet werden. Die in Figur 4 nicht gezeigten übrigen Filtereinheiten 300 können sich währenddessen entweder im Ruhezustand entsprechend Figur 1, im Regenerationsmodus entsprechend Figur 3 oder ebenfalls im Adsorptionsmodus befinden.

### Bezugszeichenliste

- 1: Adsorptionsvorrichtung
- 100,200: Ventilvorrichtungen
- 110, 120, 210, 220: Ringleitung
- 111, 121, 211, 221: Einlässe
- 112, 122, 212, 222: Auslässe
- 113, 123, 213, 223: Sperrventile
- 130,230: Verbindungsleitung
- 131,231: Auslässe
- 300: Filtereinheit
- 310: Heizvorrichtung
- 320: Kühlvorrichtung

## Patentansprüche

1. Ventilvorrichtung (100, 200) für ein Elementaranalysegerät, wobei die Ventilvorrichtung (100, 200) eine erste und eine zweite Ringleitung (110, 120, 210, 220) umfasst, die erste und die zweite Ringleitung (110, 120, 210, 220) jeweils einen Einlass (111, 121, 211, 221) und mehrere Auslässe (112, 122, 212, 222) aufweisen, jeder Auslass mit einem Sperrventil (113, 123, 212, 223) versehen ist, und die Sperrventile (113, 123, 212, 223) unabhängig voneinander geöffnet werden können.

2. Ventilvorrichtung (100, 200) nach Anspruch 1, **dadurch gekennzeichnet, dass** die Auslässe (112, 122, 212, 222) der beiden Ringleitungen (110, 120, 210, 220) jeweils paarweise mit jeweils einer Verbindungsleitung (130, 230) miteinander verbunden sind, wobei in jeder Verbindungsleitung (130, 230) ein weiterer Auslass (131, 231) angeordnet ist.

3. Ventilvorrichtung (100, 200) nach Anspruch 1 oder 2, **dadurch gekennzeichnet, dass** die beiden Ringleitungen (110, 120, 210, 220) sowie die jeweils mit den Ringleitungen (110, 120, 210, 220) verbundenen Ein- und Auslässe eine bauliche Einheit bilden.

4. Ventilvorrichtung (100, 200) nach Anspruch 3, **dadurch gekennzeichnet, dass** die beiden Ringleitungen (110, 120, 210, 220) in Form von Bohrungen in einem quaderförmigen Block ausgebildet sind.

5. Ventilvorrichtung (100, 200) nach einem der Ansprüche 1 bis 4, **dadurch gekennzeichnet, dass** der Einlass (111, 121, 211, 221) jeder Ringleitung (110, 120, 210, 220) von den beiden unmittelbar benachbarten Auslässen (112, 122, 212, 222) der gleichen Ringleitung (110, 120, 210, 220) jeweils gleichmäßig beabstandet ist und dass die Auslässe (112, 122, 212, 222) einer Ringleitung (110, 120, 210, 220) untereinander jeweils gleichmäßig beabstandet sind.

6. Ventilvorrichtung (100, 200) nach einem der Ansprüche 1 bis 5, **dadurch gekennzeichnet, dass** die Sperrventile (113, 123, 212, 223) elektronisch oder pneumatisch gesteuert sind.

7. Ventilvorrichtung (100, 200) nach Anspruch 6, **dadurch gekennzeichnet, dass** die Sperrventile (113, 123, 212, 223) elektronisch gesteuert sind und im spannungsfreien Zustand geschlossen sind.

8. Adsorbtionsvorrichtung (1) für ein Elementaranalysegerät, wobei die Adsorbtionsvorrichtung (1) eine erste Ventilvorrichtung (100) nach einem der Ansprüche 1 bis 7 und mehrere Filtereinheiten (300) umfasst, wobei jede Filtereinheit (300) einen Einlass und einen Auslass aufweist, **dadurch gekennzeichnet, dass** die Filtereinheiten (300) derart mit der ersten Ventilvorrichtung (100) verbunden sind, dass jede Filtereinheit (300) über ihren Einlass mit jeweils einem Auslass (112) der ersten Ringleitung (110) und einem Auslass (122) der zweiten Ringleitung (120) der ersten Ventilvorrichtung (100) verbunden ist.

9. Adsorbtionsvorrichtung (1) nach Anspruch 8, **dadurch gekennzeichnet, dass** die Adsorbtionsvorrichtung (1) eine zweite Ventilvorrichtung (200) nach einem der Ansprüche 1 bis 7 umfasst, wobei die Filtereinheiten (300) derart mit der zweiten Ventilvorrichtung (200) verbunden sind, dass jede Filtereinheit (300) über ihren Auslass mit jeweils einem Auslass (212) der ersten Ringleitung (210) und einem Auslass (222) der zweiten Ringleitung (220) der zweiten Ventilvorrichtung (200) verbunden ist.

10. Adsorbtionsvorrichtung (1) nach Anspruch 8 oder 9, **dadurch gekennzeichnet, dass** jede Filtereinheit (300) ein adsorbierendes Material, eine Heizvorrichtung (310) zum Erwärmen des adsorbierenden Materials und gegebenenfalls eine Kühlvorrichtung (320) zum Kühlen des adsorbierenden Materials aufweist.

11. Verfahren zum Betrieb einer Adsorbtionsvorrichtung (1) für ein Elementaranalysegerät, umfassend die Schritte:
a) Bereitstellen einer Adsorbtionsvorrichtung (1) nach einem der Ansprüche 8 bis 10;
b) Durchleiten eines Probefluids durch die erste Ringleitung (110) der ersten Ventilvorrichtung (100) der Adsorbtionsvorrichtung (1) zu mindestens einer der Filtereinheiten (300) der Adsorbtionsvorrichtung (1), so dass ein Bestandteil des Probefluids in der Filtereinheit (300) adsorbiert wird;
und gegebenenfalls
c) Durchleiten eines Spülfluids durch die zweite Ringleitung (120) der ersten Ventilvorrichtung (200) der Adsorbtionsvorrichtung (1) zu mindestens einer weiteren der Filtereinheiten (300) der Adsorbtionsvorrichtung (1), so dass adsorbierte Bestandteile aus der Filtereinheit (300) ausgespült werden.

12. Verfahren nach Anspruch 11, **dadurch gekennzeichnet, dass** das Probefluid gleichzeitig durch zwei oder mehr Filtereinheiten (300) geleitet, so dass ein Bestandteil des Probefluids in den Filtereinheiten (300) adsorbiert wird.

13. Verfahren nach Anspruch 11 oder 12, **dadurch gekennzeichnet, dass** das Spülfluid, nachdem es durch die mindestens eine weitere Filtereinheiten (300) geleitet wurde, durch einen Detektor zum Nachweis des aus der der Filtereinheit (300) ausgespülten Bestandteils geleitet wird.

## Geänderte Patentansprüche

### Geänderte Patentansprüche gemäss Regel 137(2) EPÜ.

1. Ventilvorrichtung (100, 200) für ein Elementaranalysegerät, wobei die Ventilvorrichtung (100, 200) eine erste und eine zweite Ringleitung (110, 120, 210, 220) umfasst, **dadurch gekennzeichnet, dass** die Ventilvorrichtung für ein Gas bzw. ein gasförmiges Gemisch ausgelegt ist, die erste und die zweite Ringleitung (110, 120, 210, 220) jeweils einen Einlass (111, 121, 211, 221) und mehrere Auslässe (112, 122, 212, 222) aufweisen, jeder Auslass mit einem Sperrventil (113, 123, 212, 223) versehen ist, und die Sperrventile (113, 123, 212, 223) unabhängig voneinander geöffnet werden können.

2. Ventilvorrichtung (100, 200) nach Anspruch 1, **dadurch gekennzeichnet, dass** die Auslässe (112, 122, 212, 222) der beiden Ringleitungen (110, 120, 210, 220) jeweils paarweise mit jeweils einer Verbindungsleitung (130, 230) miteinander verbunden sind, wobei in jeder Verbindungsleitung (130, 230) ein weiterer Auslass (131, 231) angeordnet ist.

3. Ventilvorrichtung (100, 200) nach Anspruch 1 oder 2, **dadurch gekennzeichnet, dass** die beiden Ringleitungen (110, 120, 210, 220) sowie die jeweils mit den Ringleitungen (110, 120, 210, 220) verbundenen Ein- und Auslässe eine bauliche Einheit bilden.

4. Ventilvorrichtung (100, 200) nach Anspruch 3, **dadurch gekennzeichnet, dass** die beiden Ringleitungen (110, 120, 210, 220) in Form von Bohrungen in einem quaderförmigen Block ausgebildet sind.

5. Ventilvorrichtung (100, 200) nach einem der Ansprüche 1 bis 4, **dadurch gekennzeichnet, dass** der Einlass (111, 121, 211, 221) jeder Ringleitung (110, 120, 210, 220) von den beiden unmittelbar benachbarten Auslässen (112, 122, 212, 222) der gleichen Ringleitung (110, 120, 210, 220) jeweils gleichmäßig beabstandet ist und dass die Auslässe (112, 122, 212, 222) einer Ringleitung (110, 120, 210, 220) untereinander jeweils gleichmäßig beabstandet sind.

6. Ventilvorrichtung (100, 200) nach einem der Ansprüche 1 bis 5, **dadurch gekennzeichnet, dass** die Sperrventile (113, 123, 212, 223) elektronisch oder pneumatisch gesteuert sind.

7. Ventilvorrichtung (100, 200) nach Anspruch 6, **dadurch gekennzeichnet, dass** die Sperrventile (113, 123, 212, 223) elektronisch gesteuert sind und im spannungsfreien Zustand geschlossen sind.

8. Adsorptionsvorrichtung (1) für ein Elementaranalysegerät, wobei die Adsorptionsvorrichtung (1) eine erste Ventilvorrichtung (100) nach einem der Ansprüche 1 bis 7 und mehrere Filtereinheiten (300) umfasst, wobei jede Filtereinheit (300) einen Einlass und einen Auslass aufweist, **dadurch gekennzeichnet, dass** die Filtereinheiten (300) derart mit der ersten Ventilvorrichtung (100) verbunden sind, dass jede Filtereinheit (300) über ihren Einlass mit jeweils einem Auslass (112) der ersten Ringleitung (110) und einem Auslass (122) der zweiten Ringleitung (120) der ersten Ventilvorrichtung (100) verbunden ist.

9. Adsorptionsvorrichtung (1) nach Anspruch 8, **dadurch gekennzeichnet, dass** die Adsorptionsvorrichtung (1) eine zweite Ventilvorrichtung (200) nach einem der Ansprüche 1 bis 7 umfasst, wobei die Filtereinheiten (300) derart mit der zweiten Ventilvorrichtung (200) verbunden sind, dass jede Filtereinheit (300) über ihren Auslass mit jeweils einem Auslass (212) der ersten Ringleitung (210) und einem Auslass (222) der zweiten Ringleitung (220) der zweiten Ventilvorrichtung (200) verbunden ist.

10. Adsorptionsvorrichtung (1) nach Anspruch 8 oder 9, **dadurch gekennzeichnet, dass** jede Filtereinheit (300) ein adsorbierendes Material, eine Heizvorrichtung (310) zum Erwärmen des adsorbierenden Materials und gegebenenfalls eine Kühlvorrichtung (320) zum Kühlen des adsorbierenden Materials aufweist.

11. Verfahren zum Betrieb einer Adsorptionsvorrichtung (1) für ein Elementaranalysegerät, umfassend die Schritte:
a) Bereitstellen einer Adsorptionsvorrichtung (1) nach einem der Ansprüche 8 bis 10;
b) Durchleiten eines Probefluids durch die erste Ringleitung (110) der ersten Ventilvorrichtung (100) der Adsorptionsvorrichtung (1) zu mindestens einer der Filtereinheiten (300) der Adsorptionsvorrichtung (1), so dass ein Bestandteil des Probefluids in der Filtereinheit (300) adsorbiert wird;
und gegebenenfalls
c) Durchleiten eines Spülfluids durch die zweite Ringleitung (120) der ersten Ventilvorrichtung (200) der Adsorptionsvorrichtung (1) zu mindestens einer weiteren der Filtereinheiten (300) der Adsorptionsvorrichtung (1), so dass adsorbierte Bestandteile aus der Filtereinheit (300) ausgespült werden.

12. Verfahren nach Anspruch 11, **dadurch gekennzeichnet, dass** das Probefluid gleichzeitig durch zwei oder mehr Filtereinheiten (300) geleitet wird, so dass ein Bestandteil des Probefluids in den Filtereinheiten (300) adsorbiert wird.

13. Verfahren nach Anspruch 11 oder 12, **dadurch gekennzeichnet, dass** das Spülfluid, nachdem es durch die mindestens eine weitere Filtereinheiten (300) geleitet wurde, durch einen Detektor zum Nachweis des aus der der Filtereinheit (300) ausgespülten Bestandteils geleitet wird.
